# EUROPÄISCHE PATENTSCHRIFT

(11) **EP 3 968 621 B1**
(45) Veröffentlichungstag und Bekanntmachung des Hinweises auf die Patenterteilung: **23.04.2025**
(21) Anmeldenummer: 21204638.7
(22) Anmeldetag: 04.12.2013
(51) Int. Cl.: H04N 1/028, A47L 11/40, A47L 9/28

(54) **VERFAHRBARES BODENREINIGUNGSGERÄT SOWIE VERFAHREN ZUM BETREIBEN EINES SOLCHEN GERÄTES**
MOBILE FLOOR CLEANING DEVICE AND METHOD FOR ITS OPERATION
APPAREIL MOBILE DE NETTOYAGE DU SOL, AINSI QUE PROCÉDÉ DE FONCTIONNEMENT D'UN TEL APPAREIL

(30) Priorität: 05.12.2012 DE 102012111792
(43) Veröffentlichungstag der Anmeldung: 16.03.2022
(62) Teilanmeldung aus: 13195586.6
(73) Patentinhaber: Vorwerk & Co. Interholding GmbH, 42275 Wuppertal (DE)
(72) Erfinder: Hillen, Lorenz, 42287 Wuppertal (DE); Meggle, Martin, 33442 Herzebrock (DE); Strang, Benjamin, 42651 Solingen (DE)
(74) Vertreter: Müller, Enno

(56) Entgegenhaltungen:
- EP-A2- 1 360 922
- US-A1- 2005 000 543
- US-A1- 2007 267 570

## Beschreibung

Die Erfindung betrifft zunächst ein selbsttätig verfahrbares Bodenreinigungsgerät, ausgebildet mit einer Einrichtung zur Erstellung fotografischer Aufnahmen einer zu befahrenden Fläche, wobei das Bodenreinigungsgerät eine Auswerteeinheit aufweist, welche eingerichtet ist, eine durch die Einrichtung erstellte Aufnahme hinsichtlich der Art eines Bodenbelags auszuwerten, und einen durch die Auswertung der Auswerteeinheit erkannten Bodenbelag im Hinblick auf eine Verfahrstrategie und/oder im Hinblick auf eine Einstellung von Reinigungsparametern, wie Bodenabstand und/oder Größe von Nebenluftöffnungen und/oder Bürstendrehzahl, zu nutzen.

Weiter betrifft die Erfindung ein Verfahren zum Betreiben eines selbsttätig verfahrbaren Bodenreinigungsgerätes, welches eine Einrichtung zur Erstellung fotografischer Aufnahmen einer zu befahrenden Fläche aufweist, wobei durch die Einrichtung vorgenommene Aufnahmen hinsichtlich der Art eines Bodenbelags ausgewertet werden und in Abhängigkeit von der Art des durch die Auswertung erkannten Bodenbelags eine Verfahrstrategie und/oder eine Einstellung von Reinigungsparametern, wie Bodenabstand und/oder Größe von Nebenluftöffnungen und/ oder Bürstendrehzahl, durchgeführt wird.

Bodenreinigungsgeräte der in Rede stehenden Art sind bekannt, so insbesondere in Form von Vorsatzgeräten für handgeführte Haushalts-Staubsauger oder selbsttätig verfahrbaren Robotern zur Reinigung und/oder Pflege von Fußböden beziehungsweise Bodenbelägen. So ist beispielsweise aus der DE 10357637 A1 ein selbsttätig verfahrbares Bodenreinigungsgerät bekannt, welches bevorzugt weiter eingerichtet ist zur feuchten Bodenreinigung, insbesondere von Hartböden, wie beispielsweise Fliesenböden. Ein Saug-/Kehrroboter ist beispielsweise aus der DE 10242257 A1 bekannt. Es kann sich hinsichtlich des Gerätes aber auch beispielsweise um einen Rasenmäher-Roboter handeln.

Bekannt sind darüber hinaus auch Bodenreinigungsgeräte in Art selbsttätig verfahrbarer Bodenreinigungsgeräte, welche über eine Kamera, insbesondere eine digitale Kamera verfügen, um so fotografische Aufnahmen der zu befahrenden Fläche, insbesondere Bodenfläche, zu erstellen, weiter insbesondere des Bodenflächenbereiches in üblicher Verfahrrichtung des Gerätes vor dem Gerät, um so beispielsweise Abgründe, wie beispielsweise Treppen, vorzeitig zu erkennen.

Des Weiteren offenbart beispielsweise die US 2005/0000543 A1 einen Reinigungsroboter, welcher in unterschiedlichen Arbeitsmodi betrieben werden kann, beispielsweise einem Hartbodenmodus und einem Teppichreinigungsmodus. Ein Bodensensor kann genutzt werden, um einen der Modi auszuwählen.

Das Dokument US 2007/0267570 A1 offenbart ein Verfahren zum Detektieren eines Objektes mit Hilfe von strukturiertem Licht, wobei der Roboter eine Höhendifferenz zwischen einer Position, auf welche das strukturierte Licht projiziert wird, und einer Referenzposition berechnet.

Das Dokument JP 2003-346150 A offenbart des Weiteren einen sich durch Gehen fortbewegenden Roboter, welcher einen Sensor zum Bestimmen einer Bodenart aufweist, um sich auf verschiedenen Untergründen ausbalancieren zu können.

Daneben sind im Stand der Technik, bspw. aus der EP 1 360 922 A2, auch Reinigungsgeräte mit Ultraschallsensoren zur Bodenartbestimmung bekannt.

Auf dem Hintergrund des genannten Standes der Technik beschäftigt sich die Erfindung mit der Aufgabenstellung, ein verfahrbares Bodenreinigungs-, Bearbeitungs- oder Bodenpflegegerät anzugeben, sowie auch ein Verfahren zum Betreiben eines solchen Gerätes, das eine günstige Abstimmung des Gerätes hinsichtlich der zu bearbeitenden Flächen ermöglicht.

Eine mögliche Lösung der Aufgabe ist nach einem ersten Erfindungsgedanken bei einem Bodenreinigungsgerät gegeben, bei welchem darauf abgestellt ist, dass die Auswerteeinheit ausgebildet ist, durch den gezielten Einsatz von digitaler Bildverarbeitung anhand von vorgegebenen Merkmalen mit den fotografischen Aufnahmen (FA) erfasste Flächen hinsichtlich Unterschieden in ihrer Beschaffenheit zu erkennen und einzuordnen, wobei durch diese Unterschiede das Bodenreinigungsgerät eingerichtet ist, in Abhängigkeit von der Art des erkannten Bodenbelags einen Reinigungsvorgang insgesamt zu unterbrechen und/ oder eine erkannte Bodenfläche zu verlassen oder zu vermeiden.

Hinsichtlich des Verfahrens wird diesbezüglich vorgeschlagen, dass durch den gezielten Einsatz von digitaler Bildverarbeitung anhand von vorgegebenen Merkmalen mit den fotografischen Aufnahmen erfasste Flächen hinsichtlich Unterschieden in ihrer Beschaffenheit erkannt und eingeordnet werden, wobei durch diese Unterschiede in Abhängigkeit von der Art des erkannten Bodenbelags ein Reinigungsvorgang insgesamt unterbrochen wird oder/und eine erkannte Bodenfläche verlassen oder vermieden wird.

Zufolge der Auswertung der befahrenen Fläche ist beispielsweise eine Unterscheidung zwischen Keramik-, Stein-, Fliesen- oder Glasflächen, Naturholz- oder Laminatflächen, Kunststoffflächen oder weiter beispielsweise Textilflächen, kurz- oder langflorige Teppichflächen ermöglicht.

Bei verfahrbaren Bodenreinigungsgeräten, beispielsweise autonom arbeitenden Bodenreinigungsgeräten, stellt sich häufig das Problem ein, die Reinigungsaktivität auf einen oder mehrere bestimmte Flächenbereiche zu beschränken beziehungsweise auf diese einzustellen. So muss beispielsweise bei Robotern zur Feuchtbodenreinigung, sogenannten Wischrobotern, sichergestellt werden, dass diese Wasser beziehungsweise Feuchtigkeit nicht auf Bodenbeläge aufbringen, die Wasser beziehungsweise Feuchtigkeit nicht vertragen, beispielsweise Teppichboden.

Zufolge der vorgeschlagenen Lösung können durch den gezielten Einsatz von digitaler Bildverarbeitung anhand von vorgegebenen Merkmalen mit den Aufnahmen erfasste Flächen hinsichtlich Unterschiede in ihrer Beschaffenheit erkannt und eingeordnet werden. Durch diese Unterschiede ist die Möglichkeit gegeben, das Bodenreinigungsgerät betreffend entsprechende Maßnahmen zu ergreifen. Eine solche Maßnahme ist die Unterbrechung des Reinigungsvorganges insgesamt, oder, insbesondere bei autonom arbeitenden Bodenreinigungsgeräten, das Verlassen oder Vermeiden der erkannten Bodenfläche. Eine zusätzliche Maßnahme kann, beispielsweise bei Vorhandensein einer rotierbaren Bürste, die Einstellung der Bürstendrehzahl sein, bei Vorhandensein eines Sauggebläses die Einstellung der Saugleistung oder bei Vorhandensein einer Wasser- beziehungsweise Feuchtigkeitsauftragsvorrichtung die Einstellung der Feuchtigkeitsabgabe. Die vorbeschriebenen Maßnahmen sind auch kombinierbar, so beispielsweise die Einstellung der Bürstendrehzahl sowie eine entsprechende Einstellung der Saugleistung.

Die Eingangsinformation ist bevorzugt ein digitales Foto von der von dem Bodenreinigungsgerät zu befahrenden Fläche, gegebenenfalls von der unmittelbar befahrenen Bodenfläche. Die an beziehungsweise in dem Gerät vorgesehene Kamera kann so ausgerichtet sein, dass die in üblicher Verfahrrichtung vor dem Gerät liegende Fläche fotografisch erfasst wird. Sie kann aber auch unterseitig des Gerätes und damit vornehmlich zur Erfassung der unmittelbar überfahrenen Fläche angeordnet beziehungsweise ausgerichtet sein.

Weiter bevorzugt werden regelmäßig fotografische Aufnahmen erstellt, so weiter bevorzugt in festgelegten Zeitabständen von bis zu 2 Sekunden, weiter bevorzugt von bis zu 1 Sekunde, wobei in diesem Zusammenhang weiter bevorzugt der Zeitabstand zwischen zwei fotografischen Aufnahmen abhängig ist von der Verfahrgeschwindigkeit des Gerätes. So sind bei höheren Verfahrgeschwindigkeiten mehr Aufnahmen pro Zeiteinheit vorgesehen als bei demgegenüber geringerer Verfahrgeschwindigkeit.

Das bevorzugt digitale Foto wird von einer Software, welche weiter bevorzugt auf einem Mikroprozessor/Mikrokontroller läuft, ausgewertet, so insbesondere hinsichtlich des Reflektionsgrades und/oder hinsichtlich eines in dem Foto erkannten Musters. Zu diesen ermittelten Werten oder Mustern liegen in bevorzugter Ausgestaltung Vergleichswerte oder Vergleichsmuster innerhalb einer Datenbank vor, wobei diesen Vergleichswerten Reinigungsparameter zugeordnet sind. Hierdurch ist beispielsweise eine Unterscheidung zwischen einem Teppichboden und einem Hartboden ermöglicht.

Weiter ist zufolge der vorgeschlagenen Lösung eine Begrenzung des Arbeitsgebietes von selbsttätig verfahrbaren Bodenreinigungsgeräten ermöglicht, ohne den Untergrund, d.h. den zu befahrenden Boden und die Umgebung mit Markierungen präparieren zu müssen, weiter bevorzugt auch ohne den Einsatz von Umgebungskarten. Dem Gerät kann etwa vorgegeben sein, einen Teppichboden oder einen Haftboden nicht zu verlassen. Zudem ist durch den Einsatz digitaler Bildverarbeitung die selbständige Wahl geeigneter Reinigungsmodi durch das Gerät erreichbar, womit ein verbessertes Reinigungsergebnis bei bevorzugt günstiger Energieeffizienz des Gerätes erreicht wird.

Ergänzende oder alternative Merkmale im Zusammenhang mit dem vorgeschlagenen Verfahren sind auch der Beschreibung gerätebezogener Merkmale zu entnehmen. Dies gilt auch umgekehrt.

So ist in einer bevorzugten Ausgestaltung vorgesehen, dass die Auswertung in dem Bodenreinigungsgerät selbst durchführbar ist. Bevorzugt ist eine zur Auswertung der fotografischen Aufnahmen, insbesondere einer digitalen Bildaufnahme, erforderliche Software in einem elektronischen, weiter bevorzugt nicht flüchtigen, Speicher des verfahrbaren Gerätes, beispielsweise des Bodenreinigungsgerätes, enthalten. Sie kann auch bevorzugt mit einem an dem Gerät vorgesehenen Mikrokontroller ausgewertet werden. Bevorzugt werden auch die Befehle zur Einstellung von Reinigungs- oder Bearbeitungsparametern beziehungsweise der Verfahrstrategie in dem Gerät selbst generiert. Sie können sogleich in Steuersignale betreffend beispielsweise die Bürste oder dergleichen umgesetzt werden. Sie können aber auch beispielsweise einem Nutzer zur Änderung und/oder Genehmigung angezeigt werden.

In alternativer Ausgestaltung erfolgt die Auswertung mit Bezug auf das Bodenreinigungsgerät extern, so beispielsweise zufolge bevorzugter drahtloser Übermittlung der durch das Bodenreinigungsgerät erstellten fotografischen Aufnahme an ein bevorzugt stationäres oder mobiles Gerät. Ein stationäres Gerät kann beispielsweise eine Ladestation eines selbsttätig verfahrbaren Bodenreinigungsgerätes sein, an welcher Station bevorzugt die Aufladung der geräteseitigen Akkumulatoren erfolgen kann. Weiter alternativ kann das auswertende Gerät ein Computer sein, so beispielsweise ein PC, Notebook, Tablet-PC oder auch ein Smartphone, wobei darüber hinaus bevorzugt eine drahtlose Verbindung vorgesehen ist, beispielsweise Wlan oder Bluetooth. Es ist hierbei bevorzugt eine bidirektionale Kommunikation zwischen dem Bodenreinigungsgerät und dem die Aufnahme auswertenden Gerät vorgesehen, so dass über dieselben drahtlosen Verbindungswege Befehle zur Einstellung der Verfahrstrategie und/oder Reinigungsparameter an das Bodenreinigungsgerät gesendet werden können.

Die Interaktion kann darüber hinaus auch im Sinne eines "smart homes", beispielsweise unter Nutzung eines Fernsehgerätes, zur Visualisierung der Ergebnisse erfolgen. In weiterer Ausgestaltung kann das Bodenreinigungsgerät selbst über ein Display und Bedienelemente verfügen.

Die fotografisch aufzunehmende Fläche ist in weiter bevorzugter Ausgestaltung durch ein in dem Bodenreinigungsgerät vorgesehenes Leuchtelement beleuchtbar. Hierbei handelt es sich in einer Ausgestaltung um eine übliche Leuchte, beispielsweise Halogenleuchte oder eine bevorzugt weiß leuchtende LED. Bevorzugt ist in diesem Zusammenhang weiter, dass das Leuchtelement ein definiertes weißes Licht ausstrahlt.

Die Beleuchtung kann ergänzend oder alternativ auch durch Infrarotlicht vornehmbar sein.

Weiter alternativ oder kombinativ arbeitet die Kamera im nicht sichtbaren Spektralbereich. Dies ermöglicht eine Verringerung von Fremdlichteinflüssen und kann zusätzlich Aspekte zur Auswertung beitragen. Entsprechend ist dann auch das von dem Leuchtelement emittierte Licht hinsichtlich seiner Spektralwerte an den Arbeitsbereich der Kamera angepasst.

Zudem ist bevorzugt, dass die Aufnahme eine Farbaufnahme ist und hinsichtlich der Farbe auswertbar ist.

Weiter alternativ oder auch kombinativ ist die Auswertung hinsichtlich überbelichteter Bereiche (insbesondere weißer Bereiche) in einer Abbildung vornehmbar. So weisen Flächen, die beispielsweise versiegelt sind, d.h. weitestgehend wasserdicht und glatt sind, einen hohen Glanz und somit einen hohen Reflektionsgrad auf.

Glanzmessungen und Farbmessungen zur Oberflächencharakterisierung sind bekannt. Auch in einer digitalen Aufnahme ist Glanz als Indikator für eine geschlossene Oberfläche erkennbar. Teppichböden, d.h. entsprechende Böden mit einem Polfäden aufweisenden Teppichflor, weisen in der diesbezüglichen digitalen Aufnahme keinen glänzenden Kernbereich auf, da die Teppichfasern das Licht stark streuen, mit der Folge einer diffusen Reflektion.

Auch beispielsweise Holzböden oder andere Böden mit charakteristischen Mustern oder Maserungen lassen sich über die Auswertung identifizieren, wobei entsprechende Bereiche im Farbraum über statistische Methoden ermittelt werden. So ist bevorzugt eine Analyse der Farbverteilung innerhalb einer Aufnahme durch Zählen, wie viele Pixel des Bildes innerhalb eines vorgegebenen Farbbereiches liegen, der Holz repräsentiert, vorgesehen.

Zur Analyse einer Fugenstruktur, beispielsweise bei einem Fliesenboden, sind insbesondere zwei Ansätze vorgesehen.

So lässt sich eine Tiefeninformation aus zwei Bildern (entweder gleichzeitig mit einem Stereo-Kamerasystem oder zeitlich nacheinander mit einem monokularen Kamerasystem aufgenommen, die Kamerasysteme haben auch unabhängig hiervon Bedeutung) berechnen. Die hierfür benötigten Algorithmen sind als Lehrbuchwissen bekannt. In dem Tiefenbild sind beispielsweise Fliesen als glatte Oberflächen in einer Ebene zu erkennen. Fugen werden als Unterbrechungen und geringe Vertiefungen sichtbar. Gegebenenfalls fließen in die Analyse auch beispielsweise vorgegebene Daten über übliche Breiten von Fugen ein.

Alternativ oder auch kombinativ zu dieser Tiefeninformations-Analyse kann weiter eine Analyse von Kanten- und Winkelinformationen erfolgen. Die Fugen sind als relativ lange Kanten im Bild sichtbar, welche üblicherweise in zwei orthogonal zueinander stehenden Vorzugsrichtungen verlaufen. Die Detektion der Kanten und die Schätzung der Kantenorientierung kann mittels bekannter Kantenfilter (z.B. Sobel-Filter oder Canny-Filter) erfolgen. Ansätze zur Unterdrückung kurzer Kanten sind ebenfalls bekannt. Dieser Ansatz bietet sich insbesondere für monokulare Kamerasysteme an. Wird hierbei ein nach unten ausgerichtetes Kamerasystem verwendet, so werden die rechten Winkel zwischen den Fugen auch als solche abgebildet. Darüber hinaus kann auch die Breite der Fugen ausgewertet werden.

Auf Basis von Tiefeninformationen kann die Bodenebene, auf der sich das Bodenreinigungsgerät bewegt, angefittet werden. Bei sehr glatten beziehungsweise ebenen Flächen ergeben sich kaum Abweichungen von dieser Ebene; bei beispielsweise langflorigen Weichböden ergeben sich hingegen in der Regel deutliche Abweichungen zwischen tatsächlicher Höhe im Tiefenbild und der angefitteten Ebene.

Darüber hinaus sind auch bekannte Methoden zur Texturanalyse vorgesehen. Häufig werden hierzu Filterbänke aus zum Beispiel Gabor-Filtern verwendet. Bei entsprechender Parametrisierung der Filter können längere Kantensegmente detektiert werden. Sind diese über die gesamte Fläche verteilt und weitgehend in eine Vorzugsrichtung orientiert, so ist die Wahrscheinlichkeit hoch, dass es sich hierbei um gemasertes Holz handelt.

Zudem ist auch die charakteristische Faserstruktur eines Teppichbodens erkennbar, dies weiter insbesondere zufolge Identifikation über ein bekanntes Muster.

Durch die Verwendung von mehreren Merkmalen, d.h. Merkmalkombinationen, kann das Risiko von Fehlklassifikationen deutlich verringert werden.

Alternativ oder auch kombinativ zu der selbständigen Auswertung der fotografischen Aufnahme durch das Bodenreinigungsgerät beziehungsweise ein externes und mit dem Bodenreinigungsgerät kommunizierendes Gerät, ist in einer Weiterbildung des Erfindungsgegenstandes vorgesehen, dass eine Aufnahme einer Fläche vom Benutzer als zu befahren oder nicht zu befahren definierbar ist. So zeigt der Benutzer in einer Ausgestaltung vor Inbetriebnahme des Bodenreinigungsgerätes diesem die Flächen, die entweder vermieden werden sollen (Erstellung einer Negativliste) und/oder die Flächen, auf der sich das Gerät aufhalten darf/soll (Erstellung einer Positivliste). In einer beispielhaften Wohnraumumgebung erstellt der Benutzer bevorzugt Listen vor Ort, indem dieser das Gerät auf entsprechende Beläge absetzt, das Gerät den Belag charakterisieren lässt und diesen Belag auf die Positiv- oder Negativliste setzt.

Positiv- und/oder Negativlisten sind in bevorzugter Ausgestaltung in einem nicht flüchtigen Speicher des Bodenreinigungsgerätes und/oder der zugehörigen Basisstation und/oder einem mit dem Gerät unmittelbar oder mittelbar beispielsweise über die Basisstation kommunizierenden Computer oder dergleichen gespeichert.

Das Bodenreinigungsgerät ist bevorzugt mit einem monokularen Kamerasystem ausgestattet, welches nach vorn in Verfahrrichtung gerichtet ist oder, wie weiter bevorzugt, unmittelbar nach unten. So ist weiter bevorzugt die Anordnung einer solchen Kamera im Bodenbereich des Bodenreinigungsgerätes vorgesehen. Monokulare Kamerasysteme bestehen aus einer einzelnen Kamera. Mit nur einem Kamerabild kann ein solches System ausschließlich Intensitätsinformationen liefern. Zur Berechnung von Tiefeninformationen werden bevorzugt zwei nacheinander aufgenommene Bilder verrechnet.

Alternativ kann aktiv auch ein Lichtmuster, beispielsweise durch Laserlinien oder Infrarot-Spots, projiziert werden, dessen Position im Bild Rückschlüsse auf die Tiefeninformation und somit auf die 3D-Struktur der aktuell befahrenen Fläche zulässt.

In weiter bevorzugter Ausgestaltung weist das Gerät mehrere Einrichtungen zur Erstellung fotografischer Aufnahmen, d.h. mehrere insbesondere digitale Kameras auf, die weiter bevorzugt in unterschiedlichen Aufnahmewinkeln und/oder aus unterschiedlichen Richtungen bevorzugt denselben Flächenbereich ablichten. Hierdurch ist bevorzugt ein Stereo-Kamerasystem gegeben. Die zwei oder mehr vorgesehenen Kameras sind versetzt zueinander angeordnet mit teilweise überlappendem Sichtfeld. Ein solches Stereo-Kamerasystem liefert Intensitätsinformationen und erlaubt im Überlappungsbereich der Sichtfelder eine Berechnung von Tiefeninformation ohne auf zeitlich aufeinanderfolgende Kamerabilder angewiesen zu sein.

Ein nach vorn in üblicher Verfahrrichtung gerichtetes Kamerasystem kann darüber hinaus auch noch für andere Zwecke, wie beispielsweise zur Navigation eines selbsttätig verfahrbaren Bodenreinigungsgerätes oder zur Steuerung durch Gesten des Benutzers verwendet werden.

Ein nach unten gerichtetes Kamerasystem wird bevorzugt allein zur Flächenklassifikation verwendet. Durch die bevorzugte Anordnung im Bereich des Gerätebodens ist eine günstige Abschattung des Kamerasystems gegen Umgebungseinflüsse, wie beispielsweise Beleuchtungsänderungen oder Spiegelungen auf der Fläche, erreichbar. Konstante Beleuchtungsbedingungen können durch eine aktive Ausleuchtung, beispielsweise mit LEDs erreicht werden.

Die eine oder mehreren Kameras sind bevorzugt in ihrer Position, der Höhenausrichtung, weiter bevorzugt auch hinsichtlich des Blickwinkels und der Blickrichtung konfigurierbar.

Hinsichtlich des Verfahrens wird vor Durchführung einer Verfahrstrategie oder dergleichen in Abhängigkeit einer Auswertung der Aufnahmen bevorzugt ein Abfahren einer zu reinigenden Fläche unter Erstellung der Aufnahmen durchgeführt, bei welcher keine unmittelbare Reaktion auf unterschiedlich erfasste Flächenausbildungen vorgenommen wird. In dieser Lern- oder Explorationsphase wird insbesondere bei Ausgestaltung des Bodenreinigungsgerätes als selbsttätig verfahrbares Bodenreinigungsgerät bevorzugt der gesamte Boden eines Wohnraumes beziehungsweise einer Wohnung abgefahren, ohne hierbei den Boden zugleich abzureinigen. Während dieser Lern- oder Explorationsphase werden über die eine oder mehreren Kameras und die vorgesehene Auswerteeinheit Daten über bevorzugt alle auftretenden Flächenausbildungen (Bodenarten) aufgenommen. Das Abfahren zur Aufnahme der Daten wird bei Ausgestaltung des Bodenreinigungsgerätes als selbsttätig verfahrbares Bodenreinigungsgerät selbsttätig oder unter Führung durch den Benutzer, beispielsweise Führung über eine Fernbedienung, vorgenommen.

Eine autonome Exploration basiert hierbei bevorzugt auf einer Verfahrstrategie zur Reinigung von Bodenflächen, insbesondere gemäß der DE 102010000174 A1.

Bei einer derartigen Exploration wird bevorzugt der gesamte Wohnraum befahren, so dass sichergestellt ist, dass alle vorhandenen Böden für die Datensammlung erfasst werden. Der Benutzer muss hierbei die Exploration nicht überwachen.

Bei einer benutzergesteuerten Exploration (Teach-In) wird das selbsttätig verfahrbare Bodenreinigungsgerät durch den Benutzer bevorzugt ferngesteuert, beispielsweise unter Nutzung einer Fernbedienung oder eines mobilen Computers. Ein solches benutzergesteuertes Abfahren ist aus der DE 102009024990 A1 oder auch DE 102009052629 A1 bekannt.

Bei der benutzergesteuerten Exploration muss der Benutzer sicherstellen, dass alle im Wohnraum vorkommenden Böden ausreichend erfasst werden. Entsprechend ist eine durchgängige Überwachung des selbsttätig verfahrbaren Bodenreinigungsgerätes während eines solchen Abfahrens nötig.

Die erstellten Aufnahmen werden bevorzugt mittels einer Auswertesoftware, gegebenenfalls zeitlich nachgeordnet zu dem Abfahren, analysiert. Diese Analyse erfolgt bevorzugt im Zuge einer Auswertephase, in welcher mittels der Auswertesoftware die gesammelten Daten in verschiedene Bodentypen, beispielsweise Fliesen, Laminat, Parkett oder Weichboden, kategorisiert werden, die jeweils eine unterschiedliche Reinigung erfordern (beispielsweise stark Feuchtwischen, leicht Feuchtwischen, nur Saugen). Hierdurch wird jedem Boden beziehungsweise Bodenabschnitt ein eindeutiger Bodentyp zugewiesen. Die Kategorisierung der gesammelten Sensordaten in verschiedene Bodentypen erfolgt bevorzugt nach werkseitig vorgegebenen Merkmalen. Als Merkmale können beispielsweise Intensitätsinformationen (zum Beispiel Farbe, Grauwerte, Textur, Muster, Glanz oder Kontrast), aus Tiefeninformationen abgeleitete Merkmale (zum Beispiel Glattheit des Bodens, Oberflächenstruktur des Bodens oder Vorhandensein von Fugen) oder Kombinationen davon verwendet werden.

Die Auswertephase erfolgt entweder nach der Lern- beziehungsweise Explorationsphase (Offline-Verfahren) oder parallel hierzu (Online-Verfahren). Beim Online-Verfahren erfolgt die Bodenklassifikation bevorzugt erst dann, wenn alle Daten der gesamten Bodenflächen im Wohnraum gesammelt wurden. Hingegen wird beim Offline-Verfahren eine Bodenklassifikation unmittelbar im Zuge der Lern- beziehungsweise Explorationsphase durchgeführt.

Ein Ergebnis der Auswertung wird in weiter bevorzugter Ausgestaltung dem Benutzer auf einem Display visualisiert oder durch eine Sprachausgabe mitgeteilt. Der Benutzer kann entsprechend die Korrektheit der Klassifikation bestätigen oder gegebenenfalls Korrekturen vornehmen.

Eine Visualisierung der Ergebnisse und die Interaktion mit dem Benutzer kann durch ein mobiles Endgerät, durch einen klassischen Computer oder durch ein Display und Bedienelemente, welche unmittelbar an dem Bodenreinigungsgerät vorgesehen sind, erfolgen.

Für bevorzugt jeden detektierten Boden wird dem Benutzer der Boden bevorzugt in Form eines Fotos (Aufnahme) oder als markierter Bereich in einer Umgebungskarte, der vom System vorgeschlagene Bodentyp sowie die vom System dafür vorgesehenen Reinigungsparameter dargestellt. Ausgehend von dieser Darstellung kann der Benutzer die Klassifikation bestätigen oder Änderungen daran vornehmen. Hierdurch werden etwaige Fehlklassifikationen aufgedeckt und korrigiert, wodurch das Risiko von Fehlreinigungen verhindert wird.

So wird das Verfolgen einer Verfahrstrategie in Abhängigkeit einer vorgenommenen Auswertung nur nach Bestätigung des dem Benutzer übermittelten Ergebnisses der Auswertung durch den Benutzer vorgenommen. Die hierbei erzeugte Konfiguration wird bevorzugt permanent in dem Bodenreinigungsgerät gespeichert und kann in der Reinigungsphase verwendet werden. Die vorbeschriebenen Schritte Lern- beziehungsweise Explorationsphase, Auswertephase und Bestätigung durch den Benutzer müssen demzufolge nicht vor jeder Reinigungsfahrt durchgeführt werden.

Wird das selbsttätig verfahrbare Bodenreinigungsgerät hingegen in eine andere Umgebung transportiert, so kann es erforderlich oder angezeigt sein, die bestehende Konfiguration zu erweitern oder eine neue Konfiguration anzulegen.

Während der Reinigungsphase fährt das Bodenreinigungsgerät die gesamte Bodenfläche eines Raumes oder mehrerer Räume systematisch ab und reinigt diese dabei entsprechend der im vorherigen Schritt konfigurierten Reinigungsparametern. Die Reinigungsphase kann hierbei unmittelbar auf die vorangegangenen Schritte erfolgen. Sie kann aber auch unabhängig davon durchgeführt werden, da die in den vorbeschriebenen Schritten angelegte Konfiguration dauerhaft im Bodenreinigungsgerät gespeichert ist. Als Reinigungsstrategie kommt bevorzugt die aus der DE 102010000174 A1 beschriebene Verfahrstrategie zur Anwendung.

Zur Anpassung der Reinigungsparameter gemäß der in den zuvor durchgeführten Schritten gespeicherten Konfiguration sind unterschiedliche Ansätze möglich.

So ist zunächst die Einstellung der Reinigungsparameter gemäß der aktuellen Position des Bodenreinigungsgerätes im Raum bevorzugt. Hierzu lokalisiert sich das selbsttätig verfahrbare Bodenreinigungsgerät kontinuierlich mit Hilfe der diesem bekannten Karte seiner Umgebung, so dass dessen Position bestimmbar ist. Die Anpassung der Reinigungsparameter erfolgt in diesem Fall unabhängig von der vorgesehenen und beschriebenen Sensorik zur Erfassung und Auswertung von Flächen.

Alternativ erfolgt eine Anpassung der Reinigungsparameter durch kontinuierliches Abtasten der aktuell befahrenen Fläche durch die Sensorik und durch eine fortlaufende Klassifikation der aktuellen Sensordaten. Die Reinigungsparameter werden hierbei anhand des aktuell erkannten Bodentyps unmittelbar eingestellt. Ein solches System kann ohne Lokalisation des Bodenreinigungsgerätes in der Umgebung und unabhängig von einer Umgebungskarte arbeiten.

Bevorzugt ist eine Kombination der vorbeschriebenen Ansätze. So ist bevorzugt, dass bei Durchführung einer Reinigungsfahrt auf einer Fläche, die bereits zu Analyse abgefahren und analysiert wurde, weitere Aufnahmen erstellt und ausgewertet werden. Das Bodenreinigungsgerät lokalisiert sich in der Umgebungskarte, übernimmt hierbei die für die Position gespeicherte Konfiguration und verifiziert diese mit den aktuell ermittelten Sensordaten aus den fotografischen Aufnahmen. Sofern gespeicherte Konfigurationen und aktuell detektierte Konfigurationen nicht zusammenpassen, erfolgt eine Reaktion, beispielsweise in Form einer Meldung an den Benutzer. Alternativ oder auch kombinativ hierzu können in einem solchen Fall universell geltende Reinigungsparameter für diesen Flächenbereich genutzt werden ("vorsichtiges Reinigen"). Auch kann dieser Bereich ungereinigt verlassen werden.

Das beschriebene System, insbesondere bestehend aus einem Kamerasystem sowie einem Miniaturrechner zur Auswertung der Sensordaten, ist in einer Ausgestaltung als Sensormodul aufgebaut, welches neben einem selbsttätig verfahrbaren Bodenreinigungsgerät auch Verwendung finden kann in Vorsätzen von Haushalts-Bodenstaubsaugern oder Vorsätzen für Handstaubsauger oder Überbodenreinigungsgeräten.

Ein solches System kann weiter dazu genutzt werden, Benutzerfehler durch unsachgemäße Reinigung zu vermeiden. So kann ein derartiges System dem Benutzer im Falle einer Fehlreinigung beispielsweise ein visuelles Feedback geben (zum Beispiel rote Lampe), ein optisches Feedback (zum Beispiel Rütteln am Griff) oder alternativ das Bodenreinigungsgerät ausschalten.

Weiter kann ein solches Sensormodul zur automatischen Anpassung der Saugleistung eines klassischen Staubsaugers an die zu reinigende Oberfläche (zum Beispiel Gardinen, Polster, Arbeitsflächen usw.) genutzt werden.

Die vorbeschriebenen Merkmale sind darüber hinaus auch bei sogenannten Rasenmäher-Robotern anwendbar, so insbesondere um sicherzustellen, dass der Roboter sich allein auf einer Rasenfläche bewegt. Durch die Bildauswertung der befahrenen Bodenfläche wird ein Verfahren des Gerätes in an die Rasenfläche angrenzende Bereiche vermieden. Bevorzugt erfolgt hier die Auswertung der fotografischen Aufnahme zufolge Identifikation im Farbraum und/oder über die Struktur. Die Identifikation von Rasenflächen über den Farbraum erweist sich hierbei von Vorteil, da hier ein besonders charakteristischer Bereich durch den Farbstoff (Blattgrün) vorgegeben ist. Auch ist durch die Rasenstruktur ein deutliches Muster erkennbar, welches bevorzugt als Zusatzinformation zu der Farbrauminformation ausgewertet wird.

Bezüglich der durch den Benutzer in einer Ausführungsform vorzunehmenden Erstellung einer Positiv- beziehungsweise Negativliste erweist es sich diesbezüglich weiter von Vorteil, wenn im Falle eines Rasenmäher-Roboters die Aufnahme der Bodenfläche "Rasen" bereits werkseitig in eine Positivliste eingetragen ist.

Nachstehend ist die Erfindung anhand der beigefügten Zeichnung erläutert, die aber lediglich ein Ausführungsbeispiel darstellt. Auf der Zeichnung zeigt:
- Fig. 1: ein selbsttätig verfahrbares Bodenreinigungsgerät in perspektivischer Darstellung, bei schematischer Darstellung unterschiedlicher, zu überfahrender Bodenflächen;

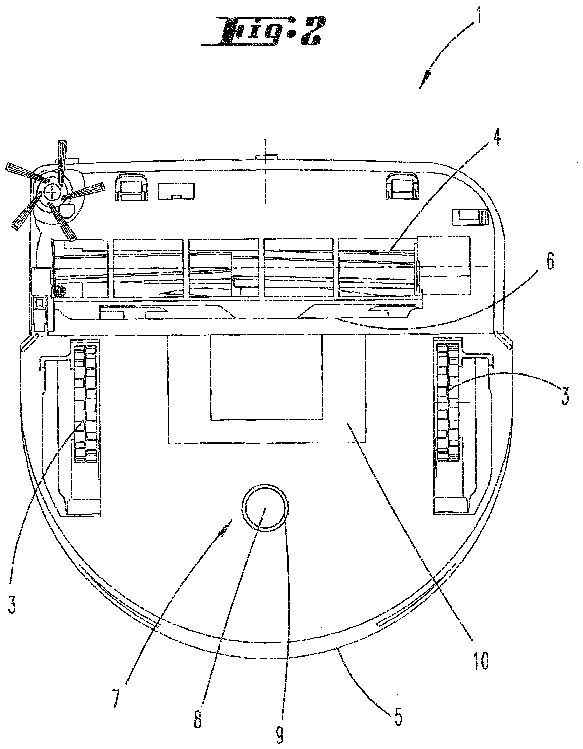

- Fig. 2: die Unteransicht gegen das Bodenreinigungsgerät;
- Fig. 3: eine schematische Darstellung bezüglich der Erstellung einer fotografischen Aufnahme der zu befahrenden Bodenfläche sowie die Auswertung der Aufnahme;
- Fig. 4: eine der Figur 3 entsprechende Darstellung, die Aufnahme und Auswertung einer gegenüber der Figur 3 geänderten Bodenfläche;
- Fig. 5: in einer schematischen Vertikalschnittdarstellung den Aufnahmebereich des Bodenreinigungsgerätes;
- Fig. 6: eine beispielhafte fotografische Aufnahme einer Bodenfläche mit einem im Rahmen der Auswertung erkannten Reflektions-Kernbereich innerhalb einer Reflektionsfläche;
- Fig. 7: eine der Figur 6 entsprechende Darstellung, jedoch betreffend eine Aufnahme einer Bodenfläche ohne Reflektions-Kernbereich;
- Fig. 8: ein Flussdiagramm betreffend die bevorzugt softwaremäßige Entscheidungsfindung zur Einstellung einer Verfahrstrategie und/oder von Reinigungsparametern;
- Fig. 9: den schematischen Grundriss einer Mehrraum-Wohnung während einer Lernphase des Bodenreinigungsgerätes zur Analyse der Bodenflächen;
- Fig. 10: eine der Figur 9 entsprechende Darstellung, jedoch die Reinigungsphase betreffend.

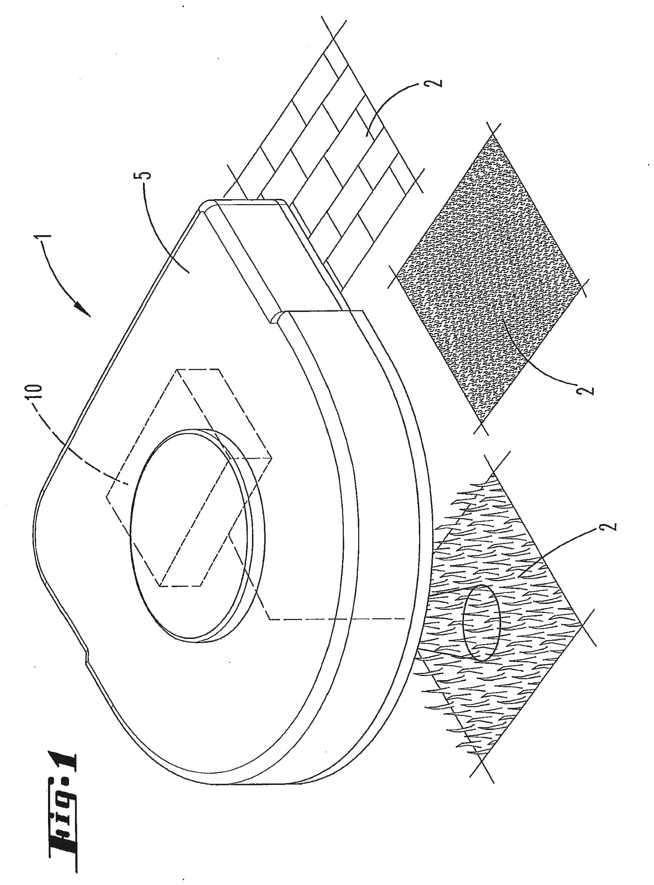

Dargestellt und beschrieben ist zunächst mit Bezug zu Figur 1 ein Bodenreinigungsgerät 1 in Form eines selbsttätig verfahrbaren Bodenreinigungsgerätes mit einem Chassis, welches unterseitig, dem zu pflegenden Boden 2 zugewandt, elektromotorisch angetriebene Verfahrräder 3 sowie eine über die Unterkante des Chassisbodens hinausragende, gleichfalls elektromotorisch angetriebene Bürste 4 trägt. Das Chassis ist überfangen von einer Gerätehaube 5, wobei das Bodenreinigungsgerät 1 der dargestellten Ausführungsform einen bevorzugten kreisförmigen Grundriss aufweist.

Weiter weist das Bodenreinigungsgerät 1 bevorzugt zusätzlich oder auch alternativ zu der Bürste 4 eine Saugmundöffnung 6 auf. In diesem Fall ist in dem Bodenreinigungsgerät 1 weiter ein elektromotorisch betriebener Sauggebläsemotor angeordnet.

Die Elektroversorgung der einzelnen Elektrokomponenten des Bodenreinigungsgerätes 1, wie insbesondere der Elektromotor der Verfahrräder 3, der Elektroantrieb der Bürste 4, weiter bevorzugt das Sauggebläse und darüber hinaus eine weiter vorgesehene Elektronik in dem Gerät zur Steuerung desselben, ist über einen nicht dargestellten, wiederaufladbaren Akkumulator erreicht.

Das Bodenreinigungsgerät 1 verfügt bevorzugt über eine Verfahrstrategie, die beispielsweise an die erfasste Umgebung und/ oder an einen Verschmutzungsgrad des Bodens 2 anpassbar ist.

Es besteht das Bedürfnis, diese Verfahrstrategie, darüber hinaus bevorzugt kombinativ hierzu oder auch alternativ Reinigungsparameter, wie beispielsweise die Drehzahl der Bürste 4 und/oder die Saugleistung an die Art des Bodenbelages anzupassen.

Hierzu ist bevorzugt bodenseitig des geräteseitigen Chassis eine Einrichtung 7 in Form einer elektronischen Kamera 8 vorgesehen, zur Erstellung fotografischer Aufnahmen der durch das Bodenreinigungsgerät 1 befahrenen Bodenfläche. Bestandteil der Einrichtung 7 ist neben der elektronischen Kamera 8 ein Leuchtelement 9.

Das Leuchtelement 9 strahlt bevorzugt ein definiertes weißes Licht aus, ist weiter bevorzugt eine weiße LED.

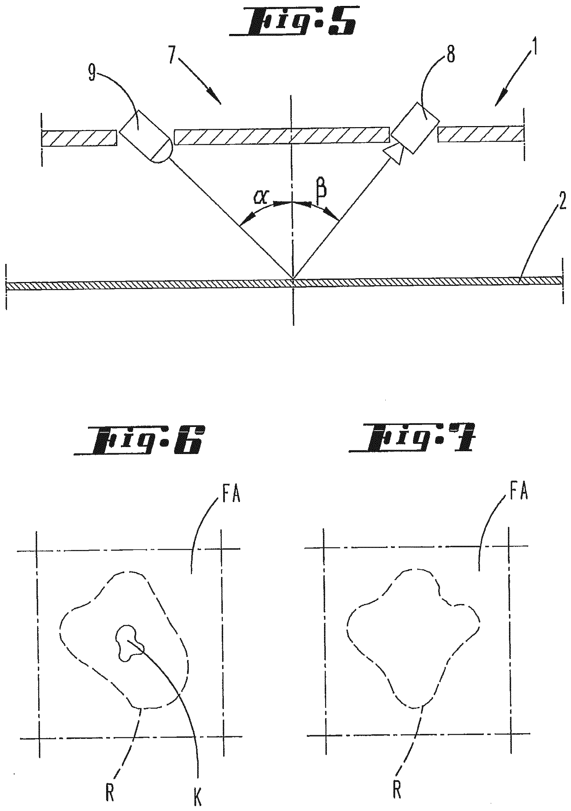

Wie insbesondere aus der schematischen Darstellung in Figur 5 zu erkennen, sind die Kamera 8 und das Leuchtelement 9 bevorzugt in einem selben oder vergleichbaren Winkel zu einer auf dem Boden 2 gerichteten Senkrechten ausgerichtet, dies bei einem bevorzugten Ausrichtungswinkel Alpha beziehungsweise Beta zur Senkrechten von 30 bis 60 Grad.

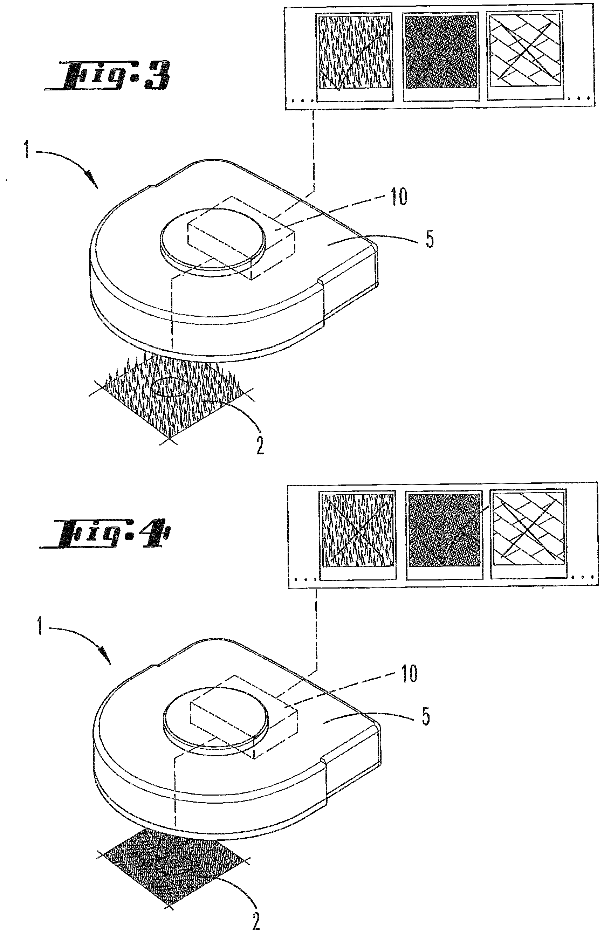

Die erstellte fotografische Aufnahme der Bodenfläche wird bevorzugt innerhalb des Bodenreinigungsgerätes, weiter bevorzugt innerhalb einer integrierten Auswerteeinheit 10 auf bestimmte Merkmale hin ausgewertet. Hierbei stehen insbesondere Verfahren und Algorithmen der digitalen Bildverarbeitung zur Merkmalsextraktion aus den einzelnen Aufnahmen zur Verfügung. Hierbei werden insbesondere der Glanz, die Farbe und die Struktur der fotografischen Aufnahme betrachtet. Analysierte und ausgewertete Aufnahmen werden bevorzugt mit Merkmalen einer weiter bevorzugt hinterlegten Datenbank verglichen (vergleiche schematische Darstellungen in den Figuren 3 und 4). In Abhängigkeit von dem ausgewerteten und erkannten Bodenmuster wird eine bestimmte Verfahrstrategie (beispielsweise Verlassen des aktuellen Bodenbelages) veranlasst und/ oder vorgegebene Reinigungsparameter an den erfassten Bodenbelag angepasst.

Die Identifikation von beispielsweise versiegelten Untergründen (weiter beispielsweise Fliesenböden) erfolgt in bevorzugter Ausgestaltung durch Betrachtung des Glanzes. Bodenflächen, die versiegelt sind, d.h. weitestgehend wasserdicht und glatt sind, weisen einen hohen Glanz, d.h. einen hohen Reflektionsgrad auf. Auch in der bevorzugt digitalen Aufnahme FA ist Glanz als Indikator für eine geschlossene Oberfläche erkennbar. In Figur 6 ist eine fotografische Aufnahme FA eines Fliesen- oder Holzbodenbereiches dargestellt. Innerhalb der in gestrichelter Linienform dargestellten ausgeleuchteten Fläche R ist ein in der Figur in durchgezogener Linienart dargestellter heller (weißer) Kernbereich K erfasst. Dieser Kernbereich K wird bevorzugt durch Mustererkennungsalgorithmen erfasst.

Figur 7 zeigt eine fotografische Aufnahme FA eines Teppichbodens. Auch dieser weist zunächst eine ausgeleuchtete Fläche R auf. Da die Teppichfasern jedoch das Licht stark streuen, was zu einem diffusen Licht führt, ist hier kein Kernbereich K ermittelbar.

Holzböden oder mit Holz beschichtete Böden werden bevorzugt im Farbraum identifiziert. Bekannte Gesten-Erkennungsalgorithmen identifizieren beispielsweise Gesicht und Hände einer Person, indem Bildpunkte, welche einen für die menschliche Haut typischen Bereich im Farbraum belegen, zur Fläche zusammengefasst werden. Auf vergleichbare Weise lässt sich beispielsweise Holz eindeutig identifizieren, sofern entsprechende Bereiche im Farbraum über statistische Methoden ermittelt wurden.

Die Identifikation von Teppichböden erfolgt bevorzugt über die Faserstruktur. Charakteristisch für einen Teppich ist, dass eine Faserstruktur vorhanden ist. Während bei Velour diese Struktur in der fotografischen Aufnahme schwer zu erkennen ist, ist bei einem insbesondere frei endende Polfäden aufweisenden Teppich ein deutliches Muster zu erkennen.

Die vorbeschriebenen Identifikationsmethoden werden in bevorzugter Ausgestaltung miteinander kombiniert, um so den Bodenbelag eindeutig zu ermitteln.

Bevorzugt ermittelt das Bodenreinigungsgerät 1 während der selbsttätigen Fahrt und der Reinigung des Bodens 2 selbst die Art des Bodenbelages und reagiert auf Basis von vorgegebenen Parametern selbständig. Dies bietet sich weiter insbesondere bei Bodenreinigungsgeräten an, die geeignet sind, den Boden 2 bei Bedarf auch feucht zu reinigen. Wird beispielsweise Teppichboden erkannt, so wird diese Fläche bevorzugt von einem sogenannten Wischroboter vermieden oder zumindest der Feuchteauftrag unterbrochen.

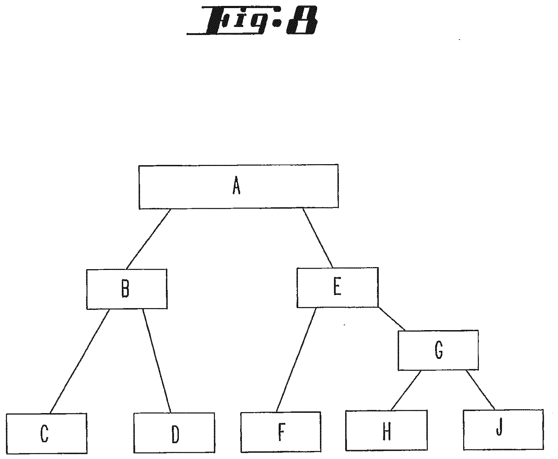

Figur 8 zeigt ein Entscheidungs-Flussdiagramm für ein selbsttätig entscheidendes Bodenreinigungsgerät 1. Ausgehend von Punkt A wird zunächst ermittelt, ob ein weißer Kernbereich K in der ausgeleuchteten Fläche R zu erkennen ist, entsprechend eine Spiegelung des Leuchtelementes 9. Ist dies der Fall, so wird auf eine Hartfläche geschlossen und in Punkt B über die Farbe innerhalb der fotografischen Aufnahme ermittelt, ob es sich hierbei um einen Holzfarbton handelt. Wurde ein Holzfarbton ermittelt, so handelt es sich insbesondere um einen versiegelten Holzboden oder beispielsweise um Laminat (Punkt C), was in bevorzugter Ausgestaltung hinsichtlich der einzustellenden Reinigungsparameter dazu führt, dass eine geringe Bürstenleistung, d.h. geringe Bürstendrehzahl eingestellt wird und nur wenig Feuchtigkeit aufgetragen wird, sofern eine Flüssigkeitsauftragseinrichtung vorgesehen ist.

Ist kein Holzfarbton ermittelbar, so liegt beispielsweise ein Linoleum- oder PVC-Boden vor, alternativ Fliese, Granit oder versiegeltes Steinzeug (Punkt D). Auch hier wird bevorzugt selbsttätig eine relativ geringe Bürstendrehzahl gewählt. Der Feuchteauftrag ist in diesem Fall normal.

Wurde unter Punkt A kein Kernbereich K ermittelt (Punkt E), so führt dies zunächst zu einem Abschalten des Flüssigkeitsauftrages, sofern eine entsprechende Vorrichtung vorhanden ist. Weiter führt dies auch zunächst zu einer Analyse, ob in der Aufnahme ein Holzfarbton ermittelbar ist. Liegt ein solcher Holzfarbton vor, so handelt es sich bevorzugt um einen offenporigen und somit diffus reflektierenden Holzboden (Punkt F), woraufhin bevorzugt selbsttätig die Bürstenleistung gering eingestellt wird.

In dem Fall, dass kein Holzfarbton ermittelt wurde, wird in einem nächsten Punkt G die fotografische Aufnahme dahingehend überprüft, ob eine Faserstruktur erkennbar ist. Werden Fasern in der Abbildung (Punkt H) ermittelt, so handelt es sich bevorzugt um einen Teppich mit langen Fasern, mit der Folge, dass die Bürste 4 bevorzugt abgeschaltet wird. Ein solcher Teppichboden wird bevorzugt allein abgesaugt. Sind keine Fasern in der Abbildung ermittelbar (Punkt J), so handelt es sich bevorzugt um einen Velour-Teppich, der mit einer erhöhten Bürstenleistung abzureinigen ist.

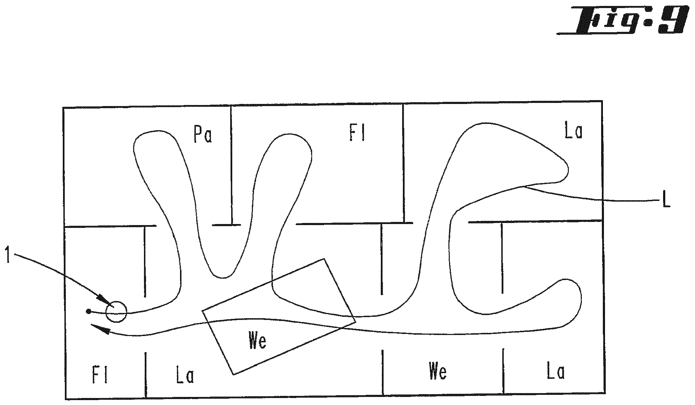

Figur 9 zeigt einen schematischen beispielhaften Grundriss einer Mehrzimmer-Wohnung. Die Bodenflächen der einzelnen Zimmer sind unterschiedlich gestaltet, so insbesondere durch Ausbildung eines Parkettbodens Pa, Fliesenböden Fl, Laminatböden La sowie eines Weichbodens We. Darüber hinaus ist in einem, einen Laminatboden La aufweisenden Raum ein Teppichläufer aufgelegt, entsprechend einen Weichboden We darstellend.

Während einer Lern- beziehungsweise Explorationsfahrt des Bodenreinigungsgerätes 1 (vergleiche kurvige Linie L in Figur 9) werden über die Kameraaufnahmen und die nachgeschaltete Auswertung Daten gesammelt, welche anschließend oder zugleich ausgewertet werden. Zur Datensammlung werden alle vorkommenden Bodenflächen beziehungsweise Bodenarten befahren. Dargestellt ist die Trajektorie einer benutzergesteuerten Exploration, bei welcher das Bodenreinigungsgerät 1 beispielsweise mittels einer Fernbedienung durch den Benutzer gesteuert wird.

Die ermittelten Bodendaten werden in einem bevorzugt nicht flüchtigen Speicher des Bodenreinigungsgerätes 1 abgelegt, dies weiter bevorzugt in Kombination mit den Umgebungsdaten einer weiter hinterlegten Umgebungskarte der Räumlichkeiten.

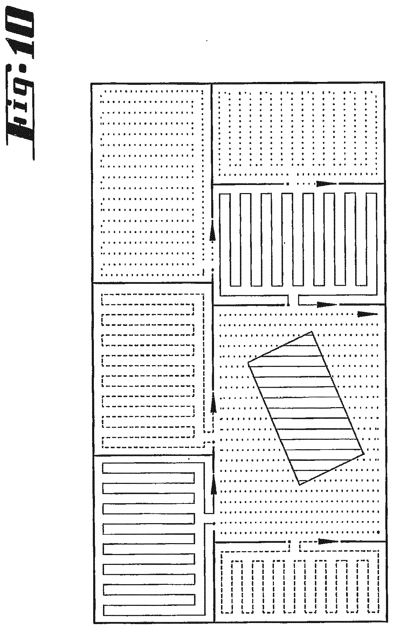

Eine wie in Figur 10 dargestellte Reinigungsfahrt des Bodenreinigungsgerätes 1 erfolgt bevorzugt selbsttätig unter Nutzung einer Umgebungskarte, wobei weiter bevorzugt eine vorgegebene Verfahrstrategie genutzt wird.

In Figur 10 ist ein exemplarischer Reinigungslauf dargestellt. Während der Reinigungsfahrt werden die verschiedenen Reinigungsparameter an die ermittelten und abgespeicherten Bodendaten angepasst.

So erfolgt bei entsprechender Ausgestaltung des Bodenreinigungsgerätes 1 bei Fliesenböden Fl ein stark feuchtes Wischen (dargestellt durch die gestrichelte Linie), bei Laminatböden La ein leichtes feuchtes Wischen mit gegenüber Fliesenböden geringerem Flüssigkeitsanteil pro m² (dargestellt durch die gepunktete Linie). Parkettböden Pa wie auch Weichböden We werden bevorzugt nur gesaugt, nicht gewischt (dargestellt durch die durchgezogene Linie).

Weiter bevorzugt werden bei der Durchführung einer Reinigungsfahrt auf einer Fläche, die bereits zur Analyse abgefahren und analysiert wurde, weitere Aufnahmen FA erstellt und ausgewertet. In den Figuren 9 und 10 ist ein Laminatboden La mit einem Weichboden We in Form eines frei ausgelegten Teppichläufers teilweise überdeckt. Im Bereich dieses Boden-Teilbereiches folgt eine entsprechend bevorzugte Abreinigung, hier - wie durch die durchgezogene Linie im Bereich des Weichbodens We dargestellt - zufolge alleiniger Absaugung.

Eine Verlagerung einer solchen beispielhaften Teppichbrücke in eine andere Position relativ zu der Laminatfläche wird im Falle einer auch während der Reinigungsfahrt kontinuierlichen Analyse des Bodens beziehungsweise der Fläche erfasst, was eine Reaktion des Bodenreinigungsgerätes 1 zur Folge hat. Dieses reagiert bei einer erfassten Änderung gegenüber den abgespeicherten Werten beispielsweise mit einer sanften Reinigung, beispielsweise mit deaktivierter Bürste sowie deaktivierter Feuchtreinigung, dies weiter beispielsweise bei geringer Saugleistung. Alternativ kann dieser Bereich auch ungereinigt überfahren werden und dem Benutzer eine entsprechende Mitteilung übermittelt werden. Auch ist diesbezüglich möglich, dass die aktuell detektierte Konfiguration mit einer gespeicherten Konfiguration in unmittelbarer Umgebung zu der momentanen Position des Bodenreinigungsgerätes 1 verglichen wird. Bei Übereinstimmung dieser Konfigurationen werden in einer Ausgestaltung die diesbezüglichen Reinigungsparameter auf der aktuell erfassten Fläche angewandt.

### Bezugszeichenliste:

| | | | |
|---|---|---|---|
| 1 | Bodenreinigungsgerät | FA | Aufnahme |
| 2 | Boden | F1 | Fliesenboden |
| 3 | Verfahrrad | La | Laminatboden |
| 4 | Bürste | Pa | Parkettboden |
| 5 | Gerätehaube | We | Weichboden |
| 6 | Saugmundöffnung | | |
| 7 | Einrichtung | | |
| 8 | Kamera | | |
| 9 | Leuchtelement | | |
| 10 | Auswerteeinheit | α | Winkel |
| | | β | Winkel |
| A | Punkt | | |
| B | Punkt | | |
| C | Punkt | | |
| D | Punkt | | |
| E | Punkt | | |
| F | Punkt | | |
| G | Punkt | | |
| H | Punkt | | |
| I | Punkt | | |
| J | Punkt | | |
| K | Kernbereich | | |
| L | Linie | | |
| R | Fläche | | |

## Patentansprüche

1. Selbsttätig verfahrbares Bodenreinigungsgerät (1), ausgebildet mit einer Einrichtung (7) zur Erstellung fotografischer Aufnahmen (FA) einer zu befahrenden Fläche, wobei das Bodenreinigungsgerät (1) eine Auswerteeinheit (10) aufweist, welche eingerichtet ist, eine durch die Einrichtung (7) erstellte Aufnahme (FA) hinsichtlich der Art eines Bodenbelags auszuwerten, und einen durch die Auswertung der Auswerteeinheit (10) erkannten Bodenbelag im Hinblick auf eine Verfahrstrategie und/oder im Hinblick auf eine Einstellung von Reinigungsparametern, wie Bodenabstand und/oder Größe von Nebenluftöffnungen und/oder Bürstendrehzahl, zu nutzen, **dadurch gekennzeichnet, dass** die Auswerteeinheit (10) ausgebildet ist, durch den gezielten Einsatz von digitaler Bildverarbeitung anhand von vorgegebenen Merkmalen mit den fotografischen Aufnahmen (FA) erfasste Flächen hinsichtlich Unterschieden in ihrer Beschaffenheit zu erkennen und einzuordnen, wobei durch diese Unterschiede das Bodenreinigungsgerät (1) eingerichtet ist, in Abhängigkeit von der Art des erkannten Bodenbelags einen Reinigungsvorgang insgesamt zu unterbrechen oder/und eine erkannte Bodenfläche zu verlassen oder zu vermeiden.

2. Bodenreinigungsgerät (1) nach Anspruch 1, **dadurch gekennzeichnet, dass** die Auswertung in dem Bodenreinigungsgerät (1) selbst durchführbar ist.

3. Bodenreinigungsgerät (1) nach einem der vorhergehenden Ansprüche, **dadurch gekennzeichnet, dass** die fotografisch aufgenommene Fläche (R) durch ein in dem Bodenreinigungsgerät (1) vorgesehenes Leuchtelement (9) beleuchtbar ist.

4. Bodenreinigungsgerät (1) nach Anspruch 3, **dadurch gekennzeichnet, dass** das Leuchtelement (9) ein definiertes weißes Licht ausstrahlt.

5. Bodenreinigungsgerät (1) nach einem der vorhergehenden Ansprüche, **dadurch gekennzeichnet, dass** die Aufnahme (FA) eine Farbaufnahme ist und hinsichtlich der Farbe auswertbar ist.

6. Bodenreinigungsgerät (1) nach einem der vorhergehenden Ansprüche, **dadurch gekennzeichnet, dass** die Auswertung hinsichtlich überbelichteter Bereiche, nämlich weißer Bereiche, in einer Abbildung vornehmbar ist.

7. Bodenreinigungsgerät (1) nach einem der vorhergehenden Ansprüche, **dadurch gekennzeichnet, dass** eine Aufnahme (FA) eines Bodenbelages vom Benutzer als zu befahren oder nicht zu befahren definierbar ist.

8. Verfahren zum Betreiben eines selbsttätig verfahrbaren Bodenreinigungsgerätes (1), welches eine Einrichtung (7) zur Erstellung fotografischer Aufnahmen (FA) einer zu befahrenden Fläche aufweist, wobei durch die Einrichtung (7) vorgenommene Aufnahmen (FA) hinsichtlich der Art eines Bodenbelags ausgewertet werden und in Abhängigkeit von der Art des durch die Auswertung erkannten Bodenbelags eine Verfahrstrategie und/oder eine Einstellung von Reinigungsparametern, wie Bodenabstand und/oder Größe von Nebenluftöffnungen und/oder Bürstendrehzahl, durchgeführt wird, **dadurch gekennzeichnet, dass** durch den gezielten Einsatz von digitaler Bildverarbeitung anhand von vorgegebenen Merkmalen mit den fotografischen Aufnahmen (FA) erfasste Flächen hinsichtlich Unterschieden in ihrer Beschaffenheit erkannt und eingeordnet werden, wobei durch diese Unterschiede in Abhängigkeit von der Art des erkannten Bodenbelags ein Reinigungsvorgang insgesamt unterbrochen wird oder/und eine erkannte Bodenfläche verlassen oder vermieden wird.

9. Verfahren nach Anspruch 8, **dadurch gekennzeichnet, dass** vor Durchführung einer Verfahrstrategie in Abhängigkeit einer Auswertung der Aufnahmen (FA) ein Abfahren einer zu reinigenden Fläche unter Erstellung der Aufnahmen (FA) durchgeführt wird, bei welcher keine unmittelbare Reaktion auf unterschiedlich erfasste Flächenausbildungen vorgenommen wird.

10. Verfahren nach einem der Ansprüche 8 oder 9, **dadurch gekennzeichnet, dass** das Abfahren selbsttätig oder unter Führung durch den Benutzer vorgenommen wird.

11. Verfahren nach einem der Ansprüche 8 bis 10, **dadurch gekennzeichnet, dass** die erstellten Aufnahmen (FA) mittels einer Auswertesoftware, gegebenenfalls zeitlich nachgeordnet zu dem Abfahren, analysiert werden.

12. Verfahren nach einem der Ansprüche 8 bis 11, **dadurch gekennzeichnet, dass** ein Ergebnis der Auswertung dem Benutzer auf einem Display visualisiert oder durch eine Sprachausgabe mitgeteilt wird.

13. Verfahren nach einem der Ansprüche 8 bis 12, **dadurch gekennzeichnet, dass** das Verfolgen einer Verfahrstrategie in Abhängigkeit einer vorgenommenen Auswertung nur nach Bestätigung des dem Benutzer übermittelten Ergebnisses der Auswertung durch den Benutzer vorgenommen wird.

14. Verfahren nach einem der Ansprüche 8 bis 13, **dadurch gekennzeichnet, dass** bei Durchführung einer Reinigungsfahrt auf einer Fläche, die bereits zur Analyse abgefahren und analysiert wurde, weitere Aufnahmen (FA) erstellt und ausgewertet werden.

## Claims

1. An automatically traveling floor cleaning appliance (1), designed with a device (7) for creating photographic pictures (FA) of a surface to be travelled over, the floor cleaning appliance (1) having an evaluation unit (10) which is set up to evaluate a picture (FA) with regard to the type of floor covering produced by the device (7), and to use a floor covering recognised by the evaluation of the evaluation unit (10) with regard to a traversing strategy and/or with regard to an adjustment of cleaning parameters, such as floor spacing and/or size of secondary air openings and/or brush speed, **characterised in that** the evaluation unit (10) is designed to detect and classify surfaces detected with the photographic pictures (FA) by the targeted use of digital image processing differences with regard to differences in their properties means of on the basis of predetermined features, whereby, based on these differences, the cleaning appliance (1) is enabled to interrupt a cleaning process as a whole or/and to leave or avoid a detected floor surface depending on the type of floor covering detected.

2. The floor cleaning appliance (1) according to claim 1, **characterised in that** the evaluation can be carried out in the cleaning appliance (1) itself.

3. The floor cleaning appliance (1) according to one of the preceding claims, **characterised in that** the photographically captured surface (R) can be illuminated by a lighting element (9) that is provided in the floor cleaning appliance (1).

4. The floor cleaning appliance (1) according to claim 3, **characterised in that** the lighting element (9) emits a defined white light.

5. The floor cleaning appliance (1) according to one of the preceding claims, **characterised in that** the picture (FA) is a colour picture and can be evaluated with regard to the colour.

6. The floor cleaning appliance (1) according to one of the preceding claims, **characterised in that** the evaluation can be performed with regard to overexposed areas, namely white areas, in an image.

7. The floor cleaning appliance (1) according to one of the preceding claims, **characterised in that** a picture (FA) of a floor covering can be defined by the user as whether to be travelled on or not to be travelled on.

8. A method for operating an automatically movable floor cleaning appliance (1), which has a device (7) for creating photographic pictures (FA) of a surface to be travelled over, wherein pictures (FA) that have been taken by the appliance (1) are evaluated with regard to the type of floor covering and, depending on the type of floor recognised by the device (7) by the evaluation, a traveling strategy and/or a setting of cleaning parameters, such as floor clearance and/or size of secondary air openings and/or brush speed is carried out, **characterised in that** by the targeted use of digital pictures processing on the basis of predetermined features, surfaces detected with the photographic pictures (FA) are recognised and classified with regard to differences in their properties, whereby in view of these differences, depending on the type of floor covering detected a cleaning process as a whole is interrupted or/and a detected floor surface is left out or avoided.

9. The method according to claim 8, **characterised in that** prior to carrying out a traveling strategy or the like and in dependence on an evaluation of the pictures (FA), traveling over a surface to be cleaned is carried out while creating the pictures (FA), with no immediate reaction taking place to surface formations detected as being different.

10. The method according to one of the claims 8 or 9, **characterised in that** said traveling is carried out automatically or under the guidance of the user.

11. The method according to one of the claims 8 to 10, **characterised in that** the created pictures (FA) are analysed by means of an evaluation software, optionally at a time following traveling over the surface.

12. The method according to one of the claims 8 to 11, **characterised in that** a result of the evaluation is visualised to the user on a display or is communicated using a voice output.

13. The method according to one of the claims 8 to 12, **characterised in that** the pursuing a traveling strategy dependence on a performed evaluation is undertaken only after the user confirms the result of the evaluation communicated to the user.

14. The method according to one of the claims 8 to 13, **characterised in that**, when carrying out a cleaning run on a surface which has already been travelled over for analysing and which has been analysed, additional pictures (FA) are created and evaluated.

## Revendications

1. Appareil de nettoyage de sol (1) déplaçable automatiquement, réalisé avec un dispositif (7) pour la réalisation de prises de vue photographiques (FA) d'une surface à parcourir, l'appareil de nettoyage de sol (1) ayant une unité d'évaluation présentant (10) qui est conçue pour évaluer une vue photographique prise (FA) en ce qui concerne le type d'un revêtement de sol, et utiliser un revêtement de sol reconnu réalisée par le dispositif (7) en vue d'une stratégie de déplacement et/ou en vue d'un réglage de paramètres de nettoyage, comme la distance au sol et/ou la taille des ouvertures d'air secondaires et/ou la vitesse de rotation des brosses, **caractérisé en ce que** l'unité d'évaluation (10) est conçue pour reconnaître et classer à l'aide de caractéristiques prédéfinies, des surfaces saisies avec les prises de vue photographiques (FA) en ce qui concerne des différences dans leur nature, grâce à ces, par l'utilisation ciblée d'un traitement d'image numérique l'appareil de nettoyage de sol (1) étant conçue, différences, pour interrompre globalement un processus de nettoyage en fonction du type de revêtement de sol reconnu ou/et pour quitter ou éviter une surface de sol reconnue.

2. Appareil de nettoyage de sol (1) selon la revendication 1, **caractérisé en ce que** l'évaluation dans peut être effectuée (1) par lui-même appareil de nettoyage de sol

3. Appareil de nettoyage de sol (1) selon l'une des revendications précédentes, **caractérisé en ce que** la surface (R) photographiée peut être éclairée par un élément lumineux (9) prévu (1) dans l'appareil de nettoyage de sol.

4. Appareil de nettoyage de sol (1) selon la revendication 3, **caractérisé en ce que** l'élément lumineux (9) émet une lumière blanche définie.

5. Appareil de nettoyage de sol (1) selon l'une des revendications précédentes, **caractérisé en ce que** le vue photographique (FA) est un vue photographique de couleur et peut être évalué en ce qui concerne la couleur.

6. Appareil de nettoyage de sol (1) selon l'une des revendications précédentes, **caractérisé en ce que** l'évaluation en ce qui concerne les zones surexposées, à savoir les zones blanches, dans une image peut être effectuée.

7. Appareil de nettoyage de sol (1) selon l'une des revendications précédentes, **caractérisé en ce qu'**un réceptacle (FA) d'un vue photographique de sol peut être défini par l'utilisateur comme devant être parcouru ou non.

8. Procédé pour faire fonctionner un appareil de nettoyage de sol (1) déplaçable automatiquement, qui présente un dispositif (7) pour réaliser des prises de vue photographiques (FA) d'une surface à parcourir, des prises de vue (FA) effectuées étant évaluées en ce qui concerne le type d'un revêtement de sol et étant effectués en fonction du type par le dispositif (7) une de revêtement de sol reconnu stratégie de déplacement et/ou un réglage de paramètres de nettoyage, comme la distance au sol et/ou la taille d'ouvertures d'air secondaires et/ou la vitesse de rotation des brosses, **caractérisé en ce que** par l'évaluation, par l'utilisation ciblée d'un traitement d'image numérique à l'aide de prédéfinies caractéristiques, des surfaces saisies avec les prises de vue photographiques (FA) sont classées reconnues et en ce qui concerne des différences dans leur nature, par ces différences un processus de nettoyage étant globalement interrompu en fonction de la nature du revêtement de sol reconnu ou/et une surface de sol reconnue étant quittée ou évitée.

9. Procédé selon la revendication 8, **caractérisé en ce qu'**avant l'exécution d'une stratégie de déplacement en fonction d'une évaluation des prises de vue (FA), un parcours d'une surface à nettoyer est effectué en établissant les prises de vue (FA), lors duquel aucune réaction immédiate n'est effectuée sur des formations de surface détectées différemment.

10. Procédé selon l'une des revendications 8 ou 9, **caractérisé en ce que** la descente est effectuée de manière automatique ou guidée par l'utilisateur.

11. Procédé selon l'une des revendications 8 à 10, **caractérisé en ce que** les prises de vue (FA) réalisées sont analysées au moyen d'un logiciel d'évaluation, éventuellement en aval du parcours.

12. Procédé selon l'une des revendications 8 à 11, **caractérisé en ce qu'**un résultat de l'évaluation est visualisé sur un écran ou communiqué à l'utilisateur par une synthèse vocale.

13. Procédé selon l'une des revendications 8 à 12, **caractérisé en ce que** le suivi d'une stratégie de déplacement en fonction d'une évaluation effectuée n'est effectué qu'après confirmation par l'utilisateur du résultat de l'évaluation transmis à l'utilisateur.

14. Procédé selon l'une des revendications 8 à 13, **caractérisé en ce que**, lors de l'exécution d'un trajet de nettoyage sur une surface qui a déjà été parcourue et analysée pour l'analyse, d'autres enregistrements (FA) sont réalisés et évalués.
